# EUROPEAN PATENT SPECIFICATION

(11) **EP 2 161 195 B1**
(45) Date of publication and mention of the grant of the patent: **18.04.2012**
(21) Application number: 09169761.5
(22) Date of filing: 08.09.2009
(51) Int. Cl.: B64D 11/00, H04H 20/62, B64D 47/08

(54) **A system and method for providing a live mapping display in a vehicle**
System und Verfahren zur Bereitstellung einer Live-Kartenanzeige in einem Fahrzeug
Système et procédé pour fournir un affichage de cartographie en direct dans un véhicule

(30) Priority: 08.09.2008 US 95192 P
(43) Date of publication of application: 10.03.2010
(73) Proprietor: Thales Avionics, Inc., Irvine California 92618-3105 (US)
(72) Inventor: Salazar, Lori, Irvine, CA 92618-3105 (US)
(74) Representative: Cabinet Plasseraud

(56) References cited:
- WO-A2-2005/079309
- DE-U1- 29 708 850
- IL-A- 111 069
- US-A1- 2003 192 052
- US-A1- 2004 217 978
- US-A1- 2008 021 636
- US-A1- 2008 136 839
- US-B1- 7 280 134

## Description

### BACKGROUND

### Field of the Invention:

The present invention relates to the field of live mapping display systems which provide geographic information to passengers in a vehicle.

### Description of the Related Art:

Many vehicles today include passenger entertainment systems. For example, many aircraft today include in-flight entertainment systems (IFES) or passenger information systems with which passengers can interact via a control device, such as control buttons on the armrests of the seats or other plug-in devices. More sophisticated IFES are being developed and employed on aircraft to further enhance the passengers' flight experience.

Typically, an IFES includes a plurality of computers, which are connected to provide various functions. These computers include, for example, audio/video head-end equipment, area distribution boxes, passenger service systems (PSS), and seat electronic14 boxes. In the modular environment of an aircraft, each of these computers is referred to as a line replaceable unit ("LRU") since most are "line fit" on an assembly line when an aircraft is built and tested. At least some of the LRUs are connected directly to passenger seats, either individually or by seat groups. These LRUs are the interface between passengers on an aircraft and the IFES, and provide access to a plurality of functions more sophisticated, multifunctional IFES may include close to a thousand separate connected computers working together to perform the plurality of functions of the IFES.

The LRUs within a conventional IFES typically include relatively simple electronics and microprocessors for performing system functions. The channel and volume of the audio provided to a seat are conventionally controlled by a seat electronics box serving a group of seats, the seat electronics box including a microprocessor and signal conditioning electronics to handle audio/video input signals. In some known systems, the IFES can be overridden by the cabin announcement system to allow for flight crew to interrupt audio or video with safety announcements for the passengers. IFESs must meet strict requirements set by the Federal Aviation Administration (FAA) for avoiding interference with safety critical flight electronics in the cockpit and elsewhere on board. In addition, the aircraft industry has set strict requirements on IFES's, for example, on the power use, bandwidth, and weight of an IFES. An IFES provider is severely restricted in choosing particular hardware and software components for these reasons.

Although existing IFES's are suitable for providing passengers with entertainment such as movies, music, news, maps, and other information, a need exists to improve IFES's to provide additional features to passengers which can make the passengers' flights even more enjoyable. For example, in the display of map information to passengers, a database comprising map information is combined with information obtained from a position sensing mechanism, such as a global positioning system (GPS). The display typically includes an icon representing the vehicle's position superimposed on a map. The map may be made to move under the icon in the display so that the displayed map is always centered on the position of the vehicle. However, the map information in the database can become outdated and may provide little information to the user about the actual area in which the vehicle is located at the time.
U.S. 2008/0136839 A1 discloses a flights portal apparatus that displays a virtual view of a surface of the earth below an aircraft.
International Patent Application Publication No. WO 2005/079309 A2 entitled "Broadcast Passenger Flight Information System and Method for Using the Same" by Brady, et al. and published on September 1, 2005, discloses an in-flight entertainment system that displays a landscape image taken by a camera positioned in a vehicle such as an aircraft. The landscape image is integrated with information pertaining to the location of the aircraft or points of interest on the landscape image. The in-flight entertainment system includes a camera system that provides video data of the landscape image from outside the aircraft, a GPS that identifies a location of the aircraft, a server including information for generating map images including points of interest overlayed on the landscape image based on the location of the aircraft, a controller that overlays the information onto the landscape image to generate a display image, and a display unit that displays the display image.
U.S. Patent No. 7.280,134 B1 entitled "Landscape Camera System with Electronic Field of View Switching" by Henderson, et al. and issued on October 9, 2007, discloses an in-flight entertainment system that displays a landscape image taken by a camera mounted to an aircraft. The in-flight entertainment system includes a landscape camera system that generates video data of the landscape below an aircraft, a server including information for generating map images including points of interest overlayed on the landscape image based on the location of the aircraft, a processor that combines the information with the landscape image to generate a map display, and a display unit that displays the map display.

### SUMMARY

A method of providing a live mapping display in a vehicle includes determining a geographic position of a vehicle accessing stored image data corresponding to the geographic position positioning a camera to direct the camera toward a target region proximate a geographic region corresponding to the accessed stored image data receiving live image data from the camera of a captured image of the target region generating a display image including the stored image data combined with the live image data and displaying the display image, the method characterised in that the target region is a subset of the geographic region corresponding to the accessed stored image data such that an area of the target region is less than an area of the geographic region and an area of the live images data included in the display image is less than an area bounded by the outer edges of the stored image data included in the display image.

An embodiment of a live mapping display system onboard a vehicle includes a position determining unit which includes a vehicle geographic position output, a camera which includes an image sensor and an image output representing live image data of a target region exterior to the vehicle as captured by the image sensor, a display unit which includes an image display that displays display image data directed toward a traveler onboard the vehicle , a data store which includes stored image data of geographic regions and a controller communicatively coupled with the position determining unit, the camera, the display unit, and the data store. The controller includes an input that receives the live image data corresponding to the target region from the camera, a selection unit which selects stored image data from the data store based on the vehicle geographic position output of the position determining unit, and a display output at which a display image data including the stored image data combined with the live image data is provided. The system is characterised in that the target region is a subset of a geographic region corresponding to the selected stored image data such that an area of the target region is less than an area of the geographic regions and an area of the live image data included in the display image data is less than an area bounded by the outer edges of the stored image data included in the displays image.

### BRIEF DESCRIPTION OF THE DRAWINGS

The above objects and advantages of the present invention will become more apparent by describing in detail a preferred embodiment thereof with reference to the attached drawings listed below:

FIG. 1A illustrates an example of a seat arrangement employing an exemplary in-flight entertainment system (IFES).

FIG.1B illustrates another example of a seat arrangement employing an exemplary in-flight entertainment system.

FIG. 2A is a block diagram of hardware components used in a first part of an exemplary in-flight entertainment system, which includes head-end components.

FIG. 2B is a block diagram of hardware components used in a second part of the exemplary in-flight entertainment system, including seat-level client components.

FIG. 2C is a block diagram of software components used in an exemplary network protocol enabled in-flight entertainment system.

FIG. 3 is a block diagram of an exemplary live mapping display system.

FIG. 4A is an exemplary screen view showing a live mapping display including a stored image with a live image inset overlaid thereupon.

FIG. 4B is another exemplary screen view showing a live mapping display including a stored image with a live image inset overlaid thereupon.

FIG. 5 is a block diagram of an exemplary method of providing a live mapping display in a vehicle.

### DETAILED DESCRIPTION

A live mapping display system for use in a vehicle, and an in-flight entertainment system infrastructure as an exemplary embodiment of the live mapping display system, are described herein. The live mapping display system may provide live updated information to a user about an area in which a vehicle is located. The infrastructure of the in-flight entertainment system may employ enhanced video technology in which images, such as digital video or still images (e.g., JPEG), are taken by one or more cameras mounted on the aircraft, and used to update or superimpose over stored images or maps relating to the current location of the aircraft. Information indicia, such as current aircraft altitude, position, attitude and speed, and location points of interest, as well as links or URLs pertaining to those points of interest or aircraft information, may be superimposed or otherwise overlayed on the images to present a still or moving updated map image of the landscape to passengers.

### In Flight Entertainment System Architecture

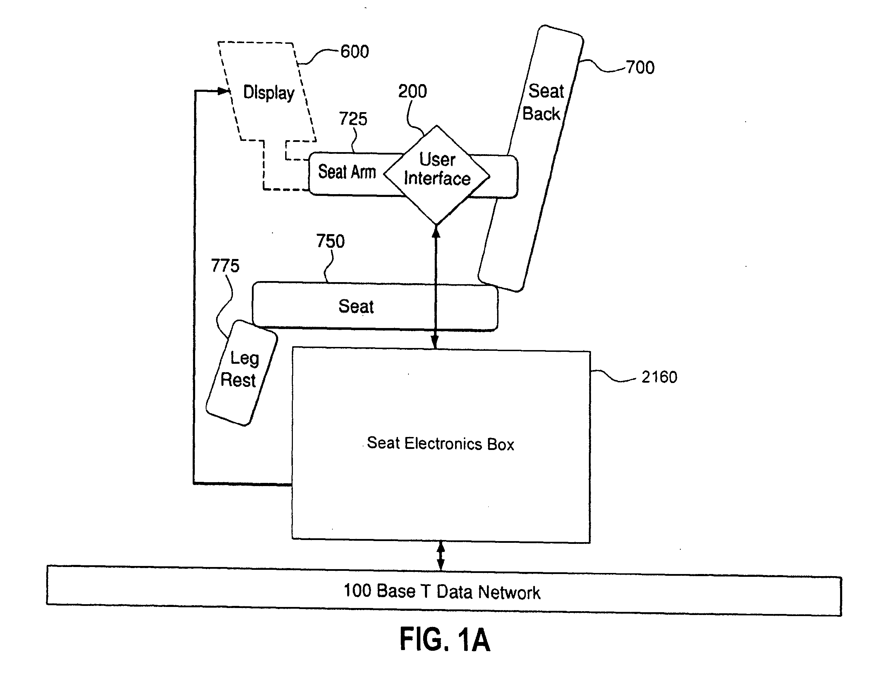

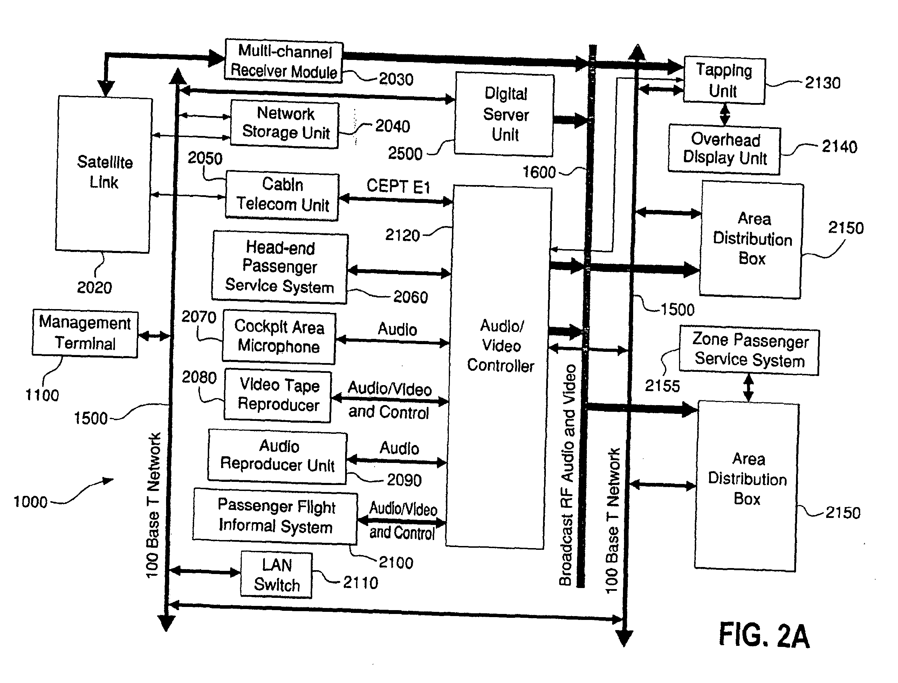

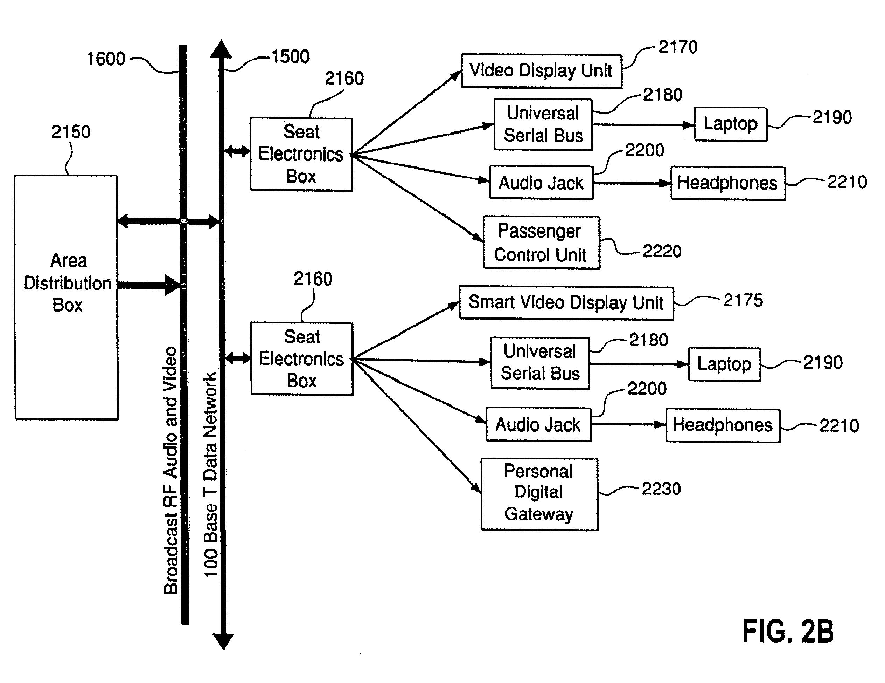

FIG. 1A illustrates an example of a seat arrangement employing an exemplary in-flight entertainment system (IFES). As illustrated, the seat arrangement includes a seat 750, with a seat back 700, a seat arm 725, and a leg rest 775. Connected to the seat is a user interface 200, which may include any device known in the art suitable for providing an input signal to the system, such as a set of membrane buttons or a touch-screen. The user interface 200 is connected to a processor within a seat electronics box 2160 (as shown and described in connection with FIG. 2B below). The processor located within the seat electronics box 2160 may be suitable for converting an input signal from the user interface 200 into a control activation signal that may be supplied to a network client, which may include software executable on the processor or another processor associated with the IFES as discussed with reference to FIGs. 2A - 2C below. The processor may include both hardware and software effective for converting the analog or digital input signal provided by the user interface 200 into the control activation signal supplied to the network client. The software may include a key routing table for mapping a particular input signal generated by the user interface 200 into a particular control activation signal.

As shown in FIG. 1A, the seat electronics box 2160 may be connected to an optional display 600. The display 600 may include both audio and video capabilities (e.g., audio capability might be provided through headphones 2210 in FIG. 2B, described below).

In one arrangement, the network client and a network server execute on the same processor, which may improve the speed with which some functions of the IFES are executed. However, the network client and the network server may execute on different processors. Communication between the network client and the network server may be carried out using network protocols, such as HTTP, FTP, or TELNET. For example, the protocol used may be an HTTP protocol and the network client may include a web browser. The HTTP protocol may be implemented using a suitable programming language, such as C++, on an operating system compatible with the hardware on the seat electronics box 2160, such as LINUX. The control activation signal supplied to the web browser may result in a URL call to a network server, which may include a web server, such as the APACHE TOMCAT web server.

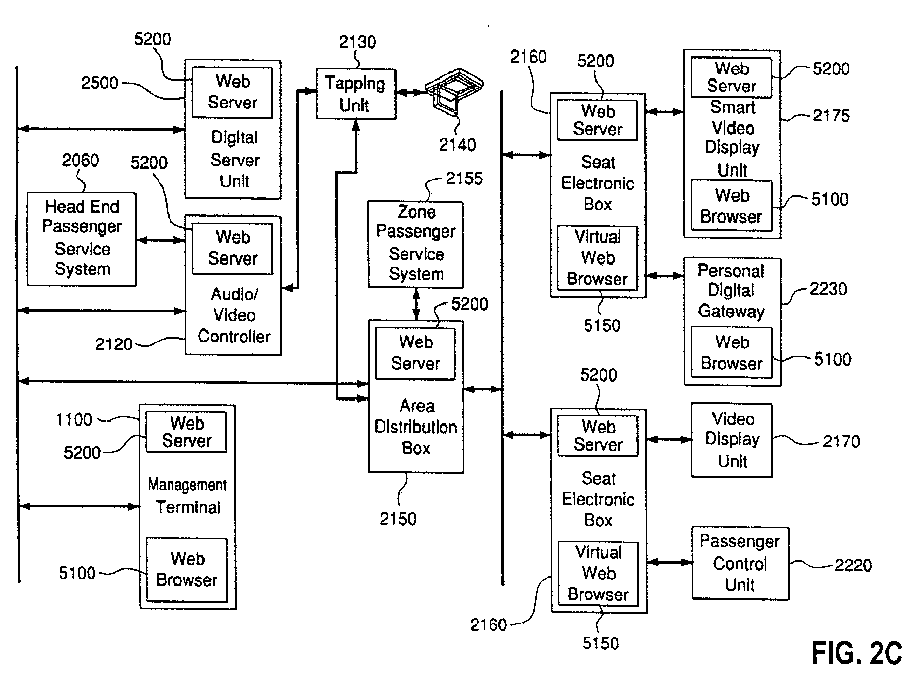

The network server may include a program, which may include a CGI script, loaded into memory on the hardware associated with the network server. The network server program may execute instructions in order to control a function of the IFES. The network server program thus may act to coordinate the hardware components within the IFES 1000 in controlling a complex function. The network server program may have control over the hardware resources of the IFES 1000 that are necessary for performing a function of the IFES 1000 associated with the hardware on which the network server program is loaded. For example, if the function to be controlled is associated with an overhead reading light, then the network server program may be connected to a switch within an electronic circuit that controls the overhead light, and may be capable of opening and closing the switch by executing instructions on hardware connected to the electronic circuit (e.g., the area distribution box 2150 shown in FIG. 2C). If the function to be controlled is associated with in-seat audio and video display, then the hardware executing the network server program may include a digital server unit 2500 or an audio/video controller 2120.

Many network server programs may run simultaneously on the same network server, and on different network servers. Several network clients may request the same network server program simultaneously, and the function performed by the network server program may be performed at the request of several different users at the same time. A limit to the number of simultaneous requests may be partly set by the network server software (in one example, the APACHE TOMCAT software running on the LINUX operating system) that serves as the platform for the network server program, and partly by the hardware resources on which the network server program is executed.

The network server and the network server program may execute on any LRU (with capable hardware resources) within the IFES. This allows for hardware resources to be conserved or distributed in a way that improves the efficiency of the overall IFES 1000. The system is very flexible and modular, and parts of the system may be moved around to different LRUs in different embodiments. This is possible since the connectivity of the parts of the system stays relatively constant when network protocols are used for communication between LRUs within the system.

The network client and the network server may be located on different LRUs within the system. The network client and the network server may communicate through the data network 1500, which may include a 100 Base T Ethernet data network 1 S00 as shown in FIGS. 2A and 2B and described below. The separation of the network client and the network server may give rise to a slightly longer time lapse (between when an input signal is provided through the user interface 200 and when a function of the IFES is performed), but the separation may allow for a greater flexibility and modularity of the IFES in that the network server may be loaded on only a few of the LRUs within the IFES rather than on every LRU that might receive a request from a user that a particular function be performed.

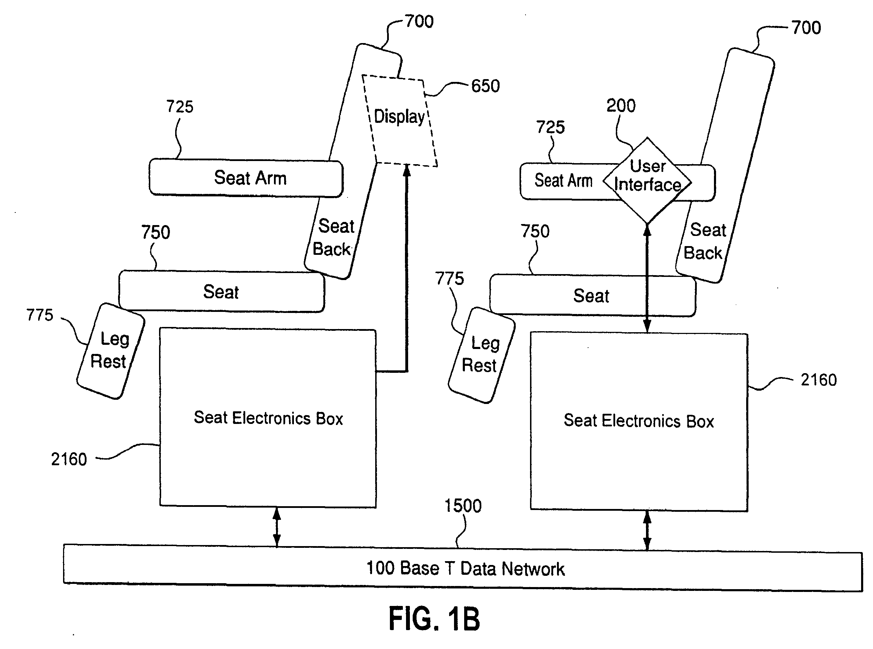

As illustrated in the arrangement of the seat-level part of the system shown in FIG. 1B, the optional display 650 need not be connected directly to the seat with the user interface 200 (as in the embodiment of FIG. 1A). The display 650 may be connected instead to the seat back 700 of the seat in front of the seat having the user interface 200.

A block diagram of the hardware components of an entire exemplary IFES 1000 is shown in FIGS. 2A and 2B. Most of the boxes in FIGS. 2A and 2B represent a single electronic component, known in the art as a line replaceable unit (LRU), since these components are fitted onto an aircraft in an assembly line when the aircraft is manufactured, and can be replaced during maintenance in a similar manner.

The system 1000 generally includes a local area network (LAN) comprising a plurality of computer components that communicate over a network data backbone 1500 and an entertainment broadcast or RF backbone 1600. The network data backbone 1500 may use 100 Base T Ethernet, and the broadcast RF backbone 1600 may be capable of carrying high-bandwidth RF transmissions containing video and audio signals.

Generally, the LRUs within the system 1000 may include a management terminal 1100, an audio/video controller 2120, a digital server unit 2500, one or more area distribution boxes 2150, and a plurality of tapping units 2130 in communication over the data backbone 1500. Any of these LRUs may include hardware capable of running a network client, a network server, or both. The audio/video controller 2120, digital server unit 2500, and other auxiliary devices may provide audio and video signals over the RF broadcast backbone 1600 to the area distribution boxes 2150 or tapping units 2130. The area distribution box 2150 may pass the signal to one or more seat electronics boxes (2160 in FIG. 2B) within an area associated with the area distribution box 2150. Alternatively, the tapping unit 2130 may receive the signal from the broadcast backbone 1600 and send the signal to one or more associated overhead display units 2140.

As shown in FIG. 2A, the cabin management terminal 1100 may include a central user interface to the IFES 1000 for flight crew members. Using a management terminal 1100 as a user interface 200, a crew member may start and stop an in-flight movie, make announcements to passengers, or check food and drink orders. The management terminal 1100 may also allow a user to enable or disable the availability of audio/video content or the Internet to passengers on the plane, or to enable or disable other functions of the IFES 1000 available to passengers through a user interface 200. Most functions of the IFES, whether initiated by a crew member or by a passenger, may be controlled by a separate network server program dedicated to controlling a particular function of the IFES 1000. As described above, the network server program need not be located on an LRU nearby a physical location at which an input signal is generated. The management terminal 1100 may run only a network client, receiving a network server response from a network server program on a different LRU within the IFES 1000. In another arrangement, the management terminal 1100 may include both a network server (capable of running a network server program) and a network client. One such embodiment is shown in FIG. 2C, in which the management terminal 1100 is shown running both a web server 5200 and a web browser 5100.

A network server program (for example, a CGI script) running on a network server on the management terminal may be capable of controlling a function associated with an audio or video radio-frequency broadcast to passengers on the aircraft, an in-seat audio or video stream, interactive game playing, access to the Internet, an overhead reading light, a flight-attendant call system (including, for example, a display of passenger requests by seat), a climate adjustment system (including, for example, a thermostat connected to an air-conditioner), a surveillance system (including, for example, one or more security cameras and one or more displays attached thereto), a cabin audio or video announcement system, or a display (audio, video, or both) of passenger flight information as discussed in more detail below.

The management terminal 1100 may be connected to a 100 Base T Ethernet data network (heretofore "Ethernet") 1500. The local area network (LAN) switch 2110 in FIG. 2A may allow for each LRU node connected to the Ethernet to be treated as a single segment, thereby enabling faster data transfer through the Ethernet. Multiple LAN switches 2110 may be used in another embodiment of the system 1000. In addition to Ethernet 100 Base T, other appropriate networking communication standards may be used, such as 10 Base 2, 10 Base 5, 1000 Base T, 1000 Base X, or Gigabit network. In yet another embodiment, the network could include an Asynchronous Transfer Mode (ATM), Token Ring, or other form of network.

The area distribution box 2150 may generally include a local seat-level routing device. The area distribution box 2150 may control the distribution of signals on the network data backbone 1500 and the RF backbone 1600 to a group of the seat electronics boxes 2160 (FIG. 2B). The area distribution box 2150 may maintain assigned network addresses of seat electronics boxes 2160 and, optionally, tapping units 2130. The area distribution box 2150 preferably may also include built-in test equipment (BITE) capabilities. Additionally, the area distribution box 2150 may control and communicate with a corresponding zone passenger service system 2155 that includes, for example, overhead reading lights and attendant call indicators. Optionally, the area distribution box 2150 may further operate to control the tapping unit 2130 in a similar way to that described below in connection with the audio/video controller 2120. In one arrangement, the area distribution box 2150 may have hardware effective for running a network client, a network server, or both. For example, as shown in FIG. 2C, the area distribution box 2150 may include a web server 5200 as a network server, which is capable of running a network server program (such as a CGI script), which may control a function associated with the area distribution box 2150 within the IFES 1000, such as control of an in-seat power supply, an overhead reading light, interactive game playing, access to the Internet, an audio or video cabin announcement system, a display of passenger flight information, an in-seat telephone or other features as described in more detail below.

The hardware of the area distribution box 2150 may include one or more microprocessors with a memory, such as a flash memory, a network interface card, an RS485 interface, and radio frequency amplifiers. Additionally, the area distribution box 2150 may contain appropriate gain control circuitry for gain control of the RF distribution 1600. The software running or stored on the area distribution box 2150 might include multiple software components, such as an operating system (e.g., LINUX), a web server (e.g., APACHE TOMCAT), TCP/IP, FTP client, FTP server, and ports or connectors for interfacing with the tapping unit(s) and CSS. An appropriate interface includes a serial port, such as RS485 interface, or a USB. As will be recognized by those of skill in the art, the area distribution box 2150 may be capable of running a network client, a network server, or both depending on the hardware resources available.

The audio/video controller 2120 may generally operate as an entertainment head-end controller. The audio/video controller 2120 may communicate with a plurality of input signal devices, such as cameras, video players, and audio players as discussed in more detail below. The audio/video controller 2120 may be in communication with both the data backbone 1500 and the broadcast backbone 1600. The functions controlled by the audio/video controller 2120 may include, for example, distributing audio and video content, controlling the tapping units 2130 and overhead display units 2140, and frequency modulation for various inputs such as video tape reproducer 2080 and audio reproducer unit 2090. As shown in FIG. 2C, the audio/video controller 2120 may include a network server in the form of a web server 5200, which is capable of running network server programs, such as CGI scripts, for controlling functions associated with the audio/video controller 2120 within the IFES 1000, such as control of a radio-frequency broadcast of audio or video, an in-seat audio or video stream (for example, of digital media), interactive game playing, access to the Internet, a flight-attendant call system, a surveillance system, a cabin audio or video announcement system, or a display of passenger flight information as discussed in more detail below.

Additionally, the audio/video controller 2120 may operate as a head-end controller of the passenger service system 2060 (PSS), which includes, for example, the public address system and warning indicators instructing passengers to fasten seat belts or not to smoke. Accordingly, the audio/video controller 2120 may be connected to PSS related inputs such as the cockpit area microphone 2070, which can interrupt other signals over the RF backbone 1600 for crew announcements. By incorporating PSS control functions into the audio/video controller 2120, the need for a separate LRU for controlling the PSS functions is eliminated.

Furthermore, the audio/video controller 2120 may operate the passenger flight information system (PFIS) 2100 as a point of access for system data, including data obtained from non-IFES equipment, such as aircraft identification, current time, flight mode, flight number, latitude, longitude, and airspeed. To facilitate external communications, the audio/video controller 2120 may be further in communication with a cabin telecom unit 2050 that may include a wireless communications system. The wireless communications system may communicate with earth or satellite based communication stations through one or more satellite links 2020.

As would be recognized by those of skill in the art, embodiments of the audio/video controller 2120 may run a network client, a network server, or both, depending on the hardware resources available. Any LRU with hardware capable of running a network client or a network server may be loaded with them, as necessary for controlling a function associated with the audio/video controller 2120 within the IFES 1000.

The audio/video controller 2120 hardware may include a microprocessor, an Ethernet switch, telephony interface components, an Aeronautical Radio, Inc. (ARINC) interface, an RS485 interface, and audio modulators for the public address and audio/video content distribution. The audio/video controller 2120 may contain various software components including, for example, an operating system such as LINUX, a web server such as APACHE TOMCAT, TCP/IP clients or servers such as FTP clients or servers, RS485 interfaces to the tapping units and CSS, and LAPD communications.

The digital server unit 2500 may provide analog and video outputs derived from digital content stored, for example, on a hard disk drive, and may be constructed modularly having a well-defined external interface. A rack mount may be provided with electrical and physical interfaces as specified in ARINC 600 (an aircraft manufacturer promulgated standard). The digital server unit 2500 may obtain power, connect to external control interfaces, provide 6 base-band video outputs with 2 stereo audio outputs associated with each video output and 12 stereo outputs and 1 RF output that combines 3 RF inputs with 6 modulated video signals (including 12 stereo video-audio) and 12 stereo modulated audio outputs at this connector. Auxiliary front mounted connectors may also be provided for diagnostic access and expansion of the storage sub system via a SCSI II interface.

The digital server unit 2500 may provide video entertainment in a way similar to a videotape reproducer 2080 or audio tape reproducer 2090. Instead of videotape, video content may be stored in compressed format, compliant with the Motion Picture Expert Group (MPEG) format (MPEG-1 or MPEG-2). The video data may be stored in multiplexed format including video and between one and sixteen audio tracks in the MPEG-2 transport stream format. The audio content may be stored, instead of with audio tape, on a hard disk in compressed format, compliant with the MPEG-3 (MP3) format. The high performance disk drive may be accessed via a wide and fast SCSI interface by the CPU on the controller. The digital content may then be streamed via TCP/IP to client platforms on circuit cards within the digital server unit 2500.

Two types of clients may be implemented: video clients (two per circuit card) and audio clients (four per card). Each video client may generate one video output with two associated simultaneous stereo language tracks selected from up to sixteen language tracks multiplexed with the video. Each audio client may generate 3 or 4 audio outputs. The digital server unit 2500 may contain three video client cards for a total of six video clients and six associated dual stereo video and audio/video outputs. Twelve of the audio outputs may be general purpose in nature, while the 13th and 14th outputs may be used to implement PRAM and BGM functions. As these two aircraft interfaces are generally monaural, MP3 programming for the 13th and 14th audio outputs may be encoded and stored as monaural MP3, and only the left channel of the stereo decoder may be connected to the appropriate aircraft public address system input.

The video clients may not only include digital MPEG audio/video decoders, but may also include general purpose PC compatible platforms, and may implement customized functions that are displayed as broadcast video channels through the broadcast backbone 1600. A typical example of this use of a video client is the implementation of a Passenger Flight Information System (PFIS) 2100.

As will be recognized by those of skill in the art, the digital server unit 2500 may be capable of running a network client, a network server, or both depending on the hardware resources available. In particular, as shown in FIG. 2c, the digital server unit 2500 may be useful for running a network server program, such as a CGI script, which may be useful for controlling functions of the IFES 1000 associated with: an in-seat audio or video stream (of digital content), a radio-frequency audio or video broadcast, interactive game playing, access to the Internet or to information stored from the Internet on the digital server unit 2500 hard disk, a surveillance system, a cabin audio or video announcement system, or a display of passenger flight information.

To communicate with people outside the aircraft, the IFES 1000 may include an optional wireless communications system, such as a satellite link 2020 in FIG. 2A, which can provide additional sources of audio, video, voice, and data content to the IFES 1000. In connection with a multi-channel receiver module 2030, the optional satellite link 2020 may provide a plurality of video channels to the IFES 1000. The multi-channel receiver module 2030 may be connected to the RF backbone 1600 that connects to other LRUs within the IFES. The satellite link 2020 may also provide Internet access in combination with a network storage unit 2040, wherein a plurality of popular web pages are downloaded to the network storage unit 2040 while the aircraft is on the ground, when the satellite link bandwidth is not consumed with bandwidth intensive graphics or movies. In cooperation with the cabin telecommunications unit 2050, the satellite link 2020 may also provide access to ground-based telephone networks, such as the North American Telephone System (NATS). The satellite link 2020, and the network storage unit 2040, may be capable of running a network client, a network server, or both.

Generally, the tapping unit 2130 includes an addressable device for tapping the broadcast signal and distributing selectable or predetermined portions of the signal to one or more display units. Accordingly, the tapping unit 2130 may be connected directly to one or more overhead display units 2140 mounted for viewing by a single passenger or by a group of passengers. The overhead display unit 2140 may be mounted, for example, to a bulkhead or ceiling in an overhead position, in the back of a seat in front of a viewer, an adjustable mounting structure, or in any appropriate location. In an embodiment, the IFES 1000 may include multiple tapping units 2130. The tapping unit may function to turn the display unit on or off, and to tune the tuner for audio or video channel selection. In an embodiment, the tapping unit 2130 may also be used to report the status of the radio RF signal on the audio/video RF backbone 1600. In the embodiment shown in FIG. 2C, the tapping unit 2130 does not have a network client or a network server. However, the tapping unit 2130 may include one or both of these software components, as will be recognized by those of skill in the art.

In FIG. 2B, which is a continuation of the block diagram of FIG. 2A, a plurality of seat electronics boxes 2160 are shown, connected to the area distribution boxes 2150 through the network data backbone 1500. Each of the seat electronics boxes 2160 may provide an interface with individual passenger control units 2220, personal digital gateways 2230, video display units 2170, or smart video display units 2175 available to the respective passengers on the aircraft. In another arrangement (not shown in FIG. 2B), more than one video display unit 2170 or passenger control unit 2220 may be connected to each seat electronics box 2160. The seat electronics boxes 2160 may also control the power to video display units 2170, the audio and video channel selection, and volume. One or more universal serial buses 2180 or audio jacks 2200 may also be connected to the seat electronics boxes 2160, allowing a passenger to connect a laptop computer 2190 or headphones 2210 into the network 1000. Hardware on a seat electronics box 2160 may include a microprocessor, RF tap, RF amplifier, RF level detection, RF gain control, and RF splitter, an FM tuner, and a digital signal processor (DSP) for handling voice over IP. As would be recognized by those of skill in the art, the seat electronics box 2160 may be capable of running a network client, a network server, or both depending on the hardware resources available. A network server program running on a network server on a seat electronics box 2160 may be used to control functions of the IFES 1000 associated with: an in-seat power supply, an overhead reading light, a climate adjustment system, a seat adjustment system (including, for example, control of one or more motors used for moving the seat), or an in-seat telephone.

As indicated in FIG. 2C, the seat electronics box 2160 may have both a network client (in the form of a virtual web browser 5150), and a network server (in the form of a web server 5200). Alternatively, a different set of software components may be loaded onto the seat electronics box 2160, as will be recognized by those of skill in the art.

### In Flight Entertainment System Functions

Features according to the embodiments of the present invention that may be employed using the IFES 1000 discussed above will now be described.

As discussed briefly above, the vehicle (e.g., an aircraft) in which the IFES 1000 is employed may include various sensors, components and the like that provide a significant amount of information relating to the state of the aircraft. The audio/video controller 2120 may receive this information from an input as discussed above and may use this information to provide triggers for airline desired presentations, such as safety information to be presented during takeoff, landing, turbulence, and so on.

Many of these triggers can be used by entertainment features not related to PFIS. These triggers may be provided by a variety of interfaces such as discrete keylines, ARINC 429 messages, GPS systems, ARINC 485 interfaces, and others, which may provide the various inputs to the audio/video controller 2120. A trigger may, for example, provide,what is known as "City Pair Information" to assist in language selection, destination related advertising, general destination airport information, flight specific information and so on. That is, once the information concerning the name of the destination is received by the audio/video controller 2120, the audio/video controller 2120 may retrieve information relating to that destination from, for example, the digital server unit 2500 (see FIG. 2c), and control the display units 600 or 650 (see FIGS. 1A and 1B) to present that information in multimedia format to the passengers. This information may also be presented on an overhead display unit 2140 but for purposes of discussion, this description will refer to display units 600 and 650 which are located at each passenger seat, and each passenger may interact with his or her respective display unit.

Another trigger may include a "Doors Closed" trigger which can be used by the audio/video controller 2120 to trigger special messages such as "Cell Phones Should Be Turned Off', "Please Pay Attention to the Safety Briefing", and so on. A "Weight On Wheels" trigger indicates when the aircraft has left the ground. The audio/video controller 2120 can use this input information to trigger the display units 600 or 650 to present information such as speed, altitude, or other information which is not of much use on the ground. This trigger also represents the actual time of take-off and should be used by the IFES 1000 in any flight time calculations. The "Fasten Seat Belt" trigger indicates when the flight crew has activated the fasten seat belt signs, and hence, the audio/video controller 2120 can use this input information to control the display units 600 or 650 to supplement the signs with a "Please Fasten Your Seat Belt" graphic message.

In addition to information about the current location of the aircraft and the flight path, additional information appropriate to each phase of the flight may be presented. For example, at the start of the flight, the audio/video controller 2120 may control the display units 600 or 650 to generate greetings such as "welcome aboard", information relating to the aircraft, features available on the aircraft, operating instructions, or any other information which would be useful to the passenger at the beginning of the flight. During the flight, the audio/video controller 2120 may support the generation of display information about current activities such as meal service, duty free sales, audio program description or video program operation. Toward the end of the flight, the audio/video controller 2120 may control the display units 600 or 650 to provide information about the destination airport, baggage claim, customs and immigration, connecting flights and gates. The IFES 1000 and, in particular, the audio/video controller 2120 may use the various interfaces defined to be as automatic as possible, but may also support the manual entry of information for display by the crew.

For example, External Message Requests may be activated by a trigger by an event or input from cabin or flight crew to the audio/video controller 2120 to provide the ability to have a variety of airline messages such as "Duty Free Shop is Open" or other fixed (pre-formatted) and free-form (crew entered) messages generated by the display units 600 or 650. In addition, as discussed above, the PFIS 1000 may receive information from a variety of aircraft interfaces such as the Flight Management Computer, Maintenance Computer, ACARS, Cabin Telephone Unit, and so on, and may also monitor information on busses such as the cabin printer data bus. This information may be used by the audio/video controllcr 2120 to cause the display units 600 or 650 to generate additional informational displays for the passengers as well as to assist in collecting maintenance information. The audio/video controller 2120 may also obtain information on flights and gates from data interfaces such as ACARS or the printer. As off-aircraft communications are enhanced, the audio/video controller 2120 may obtain information through data services such as E-mail and SMS Messaging.

### Live Mapping Display System

Position information, such as latitude, longitude, altitude, heading, pitch, and yaw, may be used by the audio/video controller 2120 to identify the location of the aircraft on a map that may be displayed on the display units 600 or 650. This information also can be used by the audio/video controller 2120 to trigger events such as special messages, special maps, or other location related information to be presented in multimedia format by the display units 600 or 650: This information may also used to implement landscape camera image enhancement which is discussed in more detail below. Flight Phase Information from the aircraft systems can be used by the audio/video controller 2120 to enhance a variety of aspects of the map or information presentation being generated by the display units 600 or 650. These enhancements include the types of images that are to be presented, the times when images are to be presented, and so on.

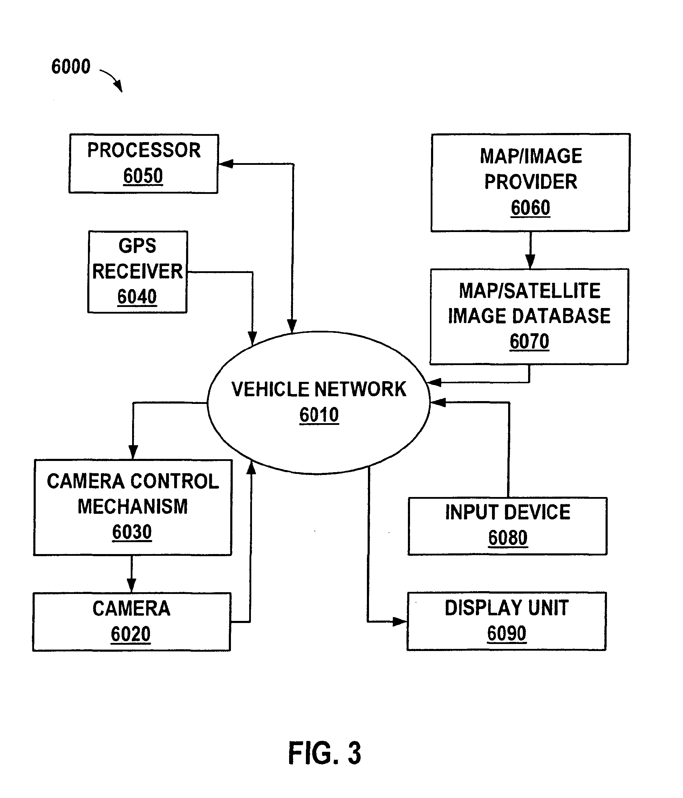

FIG. 3 is a block diagram of an exemplary live mapping display system 6000. The live mapping display system 6000 may include a vehicle network 6010 through which various components of the live mapping display system 6000 are communicatively coupled. In some embodiments, multiple components of the live mapping display system 6000 may be communicatively coupled directly to each other. The live mapping display system 6000 may include embodiments of the in flight entertainment system 1000 described with reference to FIGs. 1A, 1B, 2A, 2B, and 2C. Accordingly, the live mapping display system 6000 may include and/or be integrated with features described herein with respect to the in flight entertainment system 1000.

While the live mapping display system 6000 is described herein as including embodiments of an in flight entertainment system deployed aboard an aircraft, in other embodiments, the live mapping display system 6000 may be deployed aboard other vehicles including water vessels or land vehicles, such as trains, boats, ships, recreational vehicles, and buses.

The live mapping display system 6000 may include a position determining unit configured to determine a geographic position of the aircraft. The position determining unit may include a GPS receiver 6040. The GPS receiver 6040 may determine a precise geographic position of the aircraft subject to accuracy permitted by typical GPS equipment and operating conditions. The geographic position may include a position in three dimensions, and may include GPS coordinates as well as altitude information. The altitude information may be determined according to the GPS receiver 6040, according to an altimeter, or according to a combination thereof. The position determining unit may also include a gyroscope. The position determining unit may also be configured to determine a pitch angle, a roll angle, and a yaw angle of the aircraft.

The live mapping display system 6000 may also include a stored map/satellite image database 6070. The database 6070 may be obtained from a map/image provider 6060 via a preloaded database such as on a CD-ROM, DVD-ROM, hard disk, or other computer-readable data storage device. Alternatively, the database 6070 may be obtained over a network such as the Internet, or wirelessly such as via a satellite interface from the map/image provider, either before or during travel. For example, after a flight plan is determined, the live mapping display system 6000 may request, receive, and store map and/or image data pertaining to the geographic regions along the flight path of the aircraft according to the flight plan. Alternatively, the live mapping display system 6000 may dynamically request, receive, and store map and/or image data pertaining to the geographic region the aircraft is currently in or projected to reach in the near future, while in flight.

The live mapping display system 6000 may also include a processor 6050 which controls operations of the live mapping display system 6000. The processor 6050 may include embodiments of the audio/video controller 2120, digital server unit 2500, and/or other processors configured to execute a software program and/or firmware as described with reference to FIGs. 1A, 1B, 2A, 2B, and 2C. The processor 6050 may use information regarding the geographic position of the aircraft as determined by the GPS receiver 6040 to select maps and/or images corresponding to the geographic position of the aircraft from among the map/satellite image database 6070. The processor 6050 may then display the selected maps and/or images on one or more display units 6090. The display units 6090 may include embodiments of the displays 600, 650, 2140, 2170, and 2175 as described with reference to FIGs. 1A, 1B, 2A, 2B, and 2C. The processor 6050 may select new maps and/or images and update the display unit 6090 as the geographic position of the aircraft changes. For example, the processor 6050 may update the display unit 6090 at regular intervals, such as at regular intervals of seconds or minutes, or near-real-time, such as one or more times per second. The map and/or satellite images included in the database 6070 may be of a lower resolution and may not be accurate and up to date compared to a current view that a live camera may be able to capture. Therefore, the live mapping display system 6000 may supplement the map and/or satellite images included in the database 6070 with live images. The live mapping display system 6000 supplements the map and/or satellite images by combining the stored images with live images, with the live images seamlessly integrated into a merged or patched image.

The live mapping display system 6000 also includes camera 6020 which may be mounted on or within the aircraft and configured to capture live image data while the aircraft is traveling. The camera 6020 may be mounted in such a way as to be directed toward any target region at any angle in three dimensions relative to the frame of the aircraft. For example, the camera 6020 may be mounted using one or more gimbals. Embodiments of the camera 6020 may include a video camera having a lens and an image sensor (e.g., a CMOS sensor or a CCD sensor). The lens may include a focus feature and/or a zoom feature. The camera 6020 or a camera mount with which the camera 6020 is mounted may also include an anti-vibration technology as known in the art to counteract or reduce camera shake and vibration. The image sensor may include a high resolution image sensor (e.g., 1, 2, 3, 4, 5, 6, 8, 10, or more megapixels) and may include multiple image sensors configured to function as a unit. In some embodiments, the camera may include multiple image sensors, each having a separate lens and a separate field of view. In this way, the camera 6020 may capture images of multiple separate views in different directions simultaneously. The camera 6020 may be hardened to be suited for extreme environmental conditions as the aircraft may travel through. For example, the camera 6020 may be hardened to sustain high temperatures, freezing temperatures, high humidity, submersion in water, high winds, high vibrations, etc. The camera 6020 may be mounted to a bottom portion of the aircraft and positioned to capture live images of the landscape below the aircraft. Alternatively, the camera 6020 may be mounted inside the aircraft while positioned with a field of view encompassing the landscape below the aircraft. The camera 6020 may provide an analog video signal output or a digital video signal output. The camera 6020 may include signal processing functionality and may output digital image data corresponding to a live image captured by the camera 6020. The camera 6020 may provide real-time video data or frame image data captured at periodic time intervals, such as from approximately 30 times per second to once every minute.

A camera control mechanism 6030 may be controlled according to a command received from a processor 6050 via the vehicle network 6010. The camera control mechanism 6030 may control a direction in which the camera 6020 is aimed, an amount a zoom lens of the camera 6020 is zoomed (e.g., a field of view of the camera 6020), an aperture of the camera 6020, a shutter speed of the camera 6020, a frame rate of the camera 6020, which image sensor(s) of the camera 6020 are active and generating image data, etc.

The camera 6020 may be controlled according to input received from a user using an input device 6080. The user may include a traveler aboard the aircraft, who may be a crew member or a passenger. For example, when the aircraft is passing over an interesting geographic feature such as the Grand Canyon, a member of the flight crew may direct or aim the camera 6020 toward one or more target regions around the Grand Canyon, optionally zooming in on one or more target regions, and provide additional information to passengers of the aircraft regarding the live images captured by the camera 6020. The additional information may include textual information overlayed on a displayed image including the live images, as well as information broadcast over an intercom or public address system onboard the aircraft.

Alternatively, the processor 6050 may control the camera 6020 according to a predetermined executable program based on a geographic location of the aircraft, time of day, weather, instructions wirelessly received from another location such as a ground support station, or other factors not under the direct control of the flight crew or passengers. For example, the processor 6050 may direct the camera 6020 toward known landmarks along the route traveled by the aircraft as the aircraft is in geographic proximity to the known landmarks. The processor 6050 may zoom the camera 6020 such that a target landmark fills a sufficient percentage of the field of view of the camera 6020, and may control the camera 6020 to track the target landmark, thereby maintaining the target landmark within the field of view of the camera 6020 until the aircraft is no longer in sufficient geographic proximity to the landmark, until a predetermined period of time during which the target landmark is tracked has elapsed, or until another target is desired to be imaged by the camera 6020. The controller may track the target landmark by controlling the aim of the camera 6020 according to changes in the geographic position of the vehicle due to movement of the vehicle and the known geographic position information of the target landmark or live image data generated by the camera 6020. By tracking the target landmark while the geographic position of the vehicle changes, the display image displayed by the display unit 6090 may include an updated live view of the target region throughout a period in which the geographic position of the vehicle changes.

In some embodiments, the processor 6050 may control the camera 6020 according to voting results from polling multiple travelers onboard the aircraft. The processor 6050 may present a menu of options including a list of potential target landmarks to the travelers onboard the aircraft via their respective display units 6090. The travelers may submit their votes by manipulating their respective input devices 6080. The processor 6050 may then tabulate the votes submitted, report the outcome to the travelers, and direct the camera 6020 toward the target landmark which won the travelers' vote when the target landmark is within sufficient proximity to the aircraft, such as within view of the camera 6020. In a similar fashion, the processor 6050 may also poll the travelers on other aspects relating to the target to be imaged by the camera 6020, such as a zoom level of the camera 6020 on the target, an amount of time during which the target is to be tracked by the camera 6020, additional information to be presented accompanying the live image of the target, etc. When only a single input device 6080 is provided to a traveler, such as a member of the flight crew, the input device 6080 may be used to control the camera 6030 and/or functions of the live map display system 6000 directly. Alternatively, the live map display system 6000 may designate one of a plurality of input devices 6080 to have direct control over the camera 6020 and/or various aspects of the live map display system 6000.

In some embodiments, multiple live views from different cameras 6030 or different lens/image capture device combinations of a multi-sensor camera 6020 may be available. In these embodiments, the live map display system 6000 may be configured such that a traveler may use the input device 6080 to select one from among the multiple live views to be displayed on the display unit 6090 associated with the traveler without affecting the view displayed on other display units 6090 associated with other travelers. In a like manner, the input device 6080 may control post-processing of the live image or combined image displayed by the display unit 6090 associated with a particular traveler, including digital zoom, panning and centering, brightness, overlaid information, etc. Individual customization of information displayed on the display unit 6090 associated with the traveler may be performed by the processor 6050, or by another processor co-located with the display unit 6090. The input device 6080 may be used by a traveler to select a URL or link overlayed on the image displayed by the display unit 6090, and the live mapping display system 6000 may then display additional images or information relating to the selected URL or link. For example, the additional images or information may include web pages accessed over the Internet or other data stored within the in flight entertainment system 1000.

In addition to displaying the live image data captured by the camera 6020, the processor 6050 may save the live image data into a database. The saved live image data may then be distributed to the travelers, for example as part of a souvenier DVD of their trip, or used to update a database of stored image data. For example, the saved live image data may be used to update the stored map/image database 6070. An operator of the aircraft may sell the saved live image data to the map/image provider 6060 or another customer to generate revenue or exchange the data for other consideration.

A geographic position, such as GPS coordinates, of a target live image captured by the camera 6020 may be determined. The geographic position of the target live image may be used to align the target live image with the stored image when being displayed on the display unit 6090. The geographic position of the aircraft as determined by the GPS receiver 6040 may be used in conjunction with positioning information of the camera 6020 and distance from the camera 6020 to the target region imaged by the camera 6020 to determine the geographic position of the target live image.

Image recognition of the target live image, such as by performing a comparison between the target live image and images stored in the database 6070, may also be employed to determine a geographic position of the target live image. In such an image recognition algorithm as known in the art, the target live image may be transformed such that a perceived viewing angle matches that of the stored images in the database 6070 prior to performing the image recognition. For example, the target live image may be captured at an angle of 45 degrees, while the stored images may have been captured at a normal angle (e.g., 90 degrees). The target live image may then be transformed such that the transformed target image has a perceived normal viewing angle, which matches the angle at which the stored images were captured. After the target live image is transformed, the image recognition may be efficiently performed by comparing the transformed target image with the stored images. When a stored image is found which matches the transformed target image (e.g., a similarity between the images is sufficiently high to exceed a threshold value above which the images are considered to match), the transformed target image may be assigned a geographic position or geographic region associated with the stored image which matches the transformed target image.

The geographic position of the transformed target image may be used to seamlessly overlay the transformed target image or the untransformed target live image over the stored image on the display unit 6090. The geographic position of the transformed target image may also be displayed along with the target image. The geographic position of the target image may be displayed as GPS coordinates, as a city name, as a landmark name (e.g., Grand Canyon), or as another designation as may be desired for refercnce by travelers of the aircraft.

In an embodiment, the processor 6050 may comprise the audio/video controller 2120 used in conjunction with the digital server unit 2500 to create the combined images displayed on the display unit 6090 using information stored in the map/satellite image database 6070 on the digital server unit 2500 using a "thick client" approach with significant processing being performed in the client, that is, the network client portion of the audio/video controller 2120. However, in another embodiment, a web server/browser approach commonly called a "thin client approach" may also be used for an interactive live mapping display system 6000. The video client, which may include a network client, may execute a browser and launch page containing javascript to force periodic requests to be made to the server, for example, 2500. The 2500 server may create the pages and provide the appropriate "next page" for each server request. This capability can, for example, enable the display units 6090 to display on the combined image a link to a web site that includes information about a point of interest on the combined image. The web site information can be stored on the aircraft on the IFES 1000, or can be provided via a broadband terrestrial or satellite-based Internet communication link from outside the aircraft. For instance, if the aircraft is flying over the Grand Canyon, the display unit 6090 may display a link to a web site that includes information pertaining to the Grand Canyon that the traveler can click on to open a window on the display unit 6090 which would display that information.

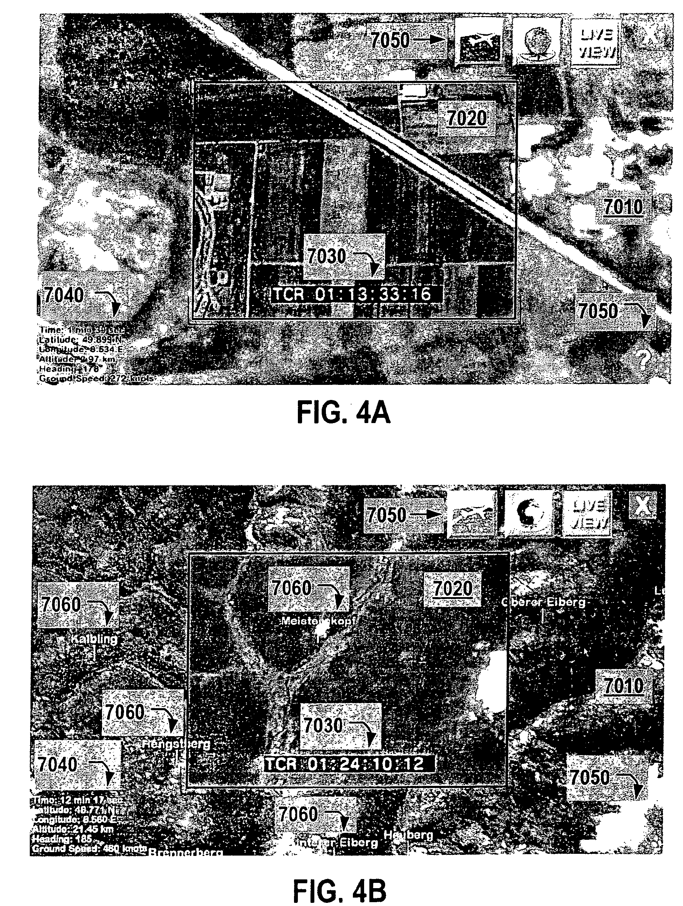

FIG. 4A is an exemplary screen view showing a live mapping display 7000 including a stored image 7010 combined with a live image 7020 inset and overlaid thereupon. The live image 7020 is provided by the camera 6020. As illustrated, the live image 7020 may have a higher resolution than the stored image 7010. In addition, the live image 7020 may include an updated and more accurate view than the stored image 7010. The live image 7020 is inset and overlaid upon the stored image 7010 in a seamless manner, such that features at the edges of the live image 7020 are aligned with corresponding features in the stored image 7010. The live image 7020 may be accurately aligned with the stored image 7010 using GPS coordinate data for both the live image 7020 and the stored image 7010, using image recognition between the live image 7020 and the stored image 7010, or a combination thereof.

The live mapping display 7000 may also include information 7030 relevant to the live image 7020 overlaid thereupon. The information 7030 may include date, time, location, resolution, etc. The live mapping display 7000 may also include information 7060 relevant to the flight overlaid upon the stored image 7010. The information 7060 may include date, time, location, heading, velocity, temperature, etc.

The live mapping display 7000 may further include icons 7050 representing user functions. The icons 7050 may be overlaid upon the stored image 7010. The icons 7050 may include icons for controlling the live mapping display 7000, such as icons for controlling the display of a stored satellite image, a stored map, a live image, to close the display image 7000, or to display help. When the live mapping display 7000 is displayed on a touch screen display unit 6090, a user may touch the touch screen of the display unit 6090 to activate the features associated with the individual icons. When the input device 6090 includes a mouse or track ball, the user may place a pointer over the desired icon 7050 using the mouse or track ball, and click a button on the input device 6090 to activate the desired icon 7050.

FIG. 4B is another exemplary screen view showing a live mapping display 7000 including a stored image 7010 combined with a live image 7020 inset and overlaid thereupon. FIG. 4B is similar to FIG. 4A, with the addition of a plurality of indicia 7040 overlayed on the live mapping display 7000. The indicia 7040 may include links which may cause additional information to be displayed when clicked on by a user.

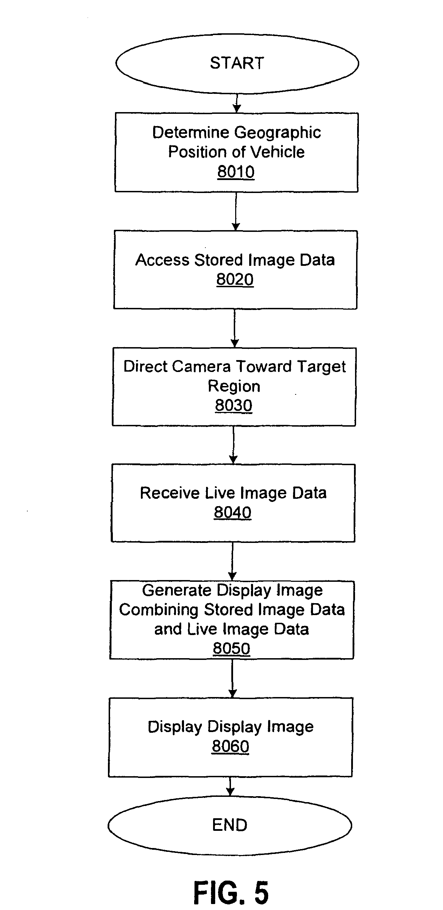

FIG. 5 is a block diagram of an exemplary method of providing a live mapping display in a vehicle. The method may be performed using an embodiment of the live mapping display system disclosed herein with reference to FIG. 3.

In a step 8010, a geographic position of a vehicle is determined. The geographic position may be determined using a position determining unit, which may include a global positioning system receiver, an altimeter, and/or a gyroscope. The geographic position may include GPS coordinates, altitude, pitch angle, roll angle, yaw, and heading.

In a step 8020, stored image data corresponding to the geographic position of the vehicle is accessed, for example from the map/satellite image database 6070. The stored image data may include satellite photo images of the landscape corresponding to the geographic position of the vehicle, map data of the region corresponding to the geographic position of the vehicle, or a combination thereof. The landscape or region corresponding to the geographic position of the vehicle may include landscape within view of a camera onboard the vehicle, or within a selectable or predetermined distance from the geographic position of the vehicle. In some embodiments, the stored image data may be accessed from a remote location, such as from a map/image provider 6060 over a wireless communication channel, such as a satellite communication link. The stored image data accessed may be keyed to accurately determine a geographic position corresponding to each image data point on the stored image data. For example, GPS coordinates may be associated with each pixel of the image corresponding to the stored image data. The stored image data may be accessed continuously or periodically as the geographic position of the vehicle changes while the vehicle travels, such that the stored image data accessed changes as the vehicle travels, and the most recently accessed stored image data corresponds to a current geographic position of the vehicle.

In a step 8030, a camera (e.g., the camera 6020) is positioned to direct the camera toward a target region proximate a geographic region corresponding to the accessed stored image data. The target region may be within view of the camera 6020, and may have GPS coordinates which are included within a range of GPS coordinates corresponding to the accessed stored image data. The target region may be proximate the geographic position of the vehicle. The camera may be directed toward the target region by controlling the camera control mechanism 6030 according to a computation of a direction in which to aim the camera in three dimensions, taking the GPS coordinates, altitude, heading, pitch angle, roll angle, and/or yaw of the vehicle into consideration in addition to the GPS coordinates and altitude of the target region. Directing the camera may also include setting the camera's aperture, shutter speed, and zoom level (e.g., field of view).

In a step 8040, live image data generated by the camera corresponding to a captured image of the target region is received. The live image data may include a live video data stream, or full frame images which may be captured on a periodic basis. The periodicity of capturing the full frame images may vary and be controllable, and may range from approximately 30 frames per second, to 15 frames per second, to 10 frames per second, to 2 frames per second, to 10 frames per minute, to 2 frames per minute, to 1 frame per minute, to 1 frame per 2 minutes, etc.

In a step 8050, a display image is generated which includes the stored image data combined with the live image data. The live image data is inserted into an inset within the stored image data. The live image data is geographically integrated, or seamlessly integrated, with the stored image data. For example, GPS coordinates corresponding to the edges of the live image data may be matched to GPS coordinates of the stored image data to determine the area in which the inset within the stored image data is to be located, and then the live image data may be overlaid on the stored image data in the inset such that the GPS coordinates of the live image data overlay onto the corresponding GPS coordinates of the stored image data. Because a viewing angle from the camera to the target region in the live image data may be different than the viewing angle of the corresponding stored image data, a transformation of the live image data may be performed such that an apparent viewing angle of the transformed live image data matches that of the stored image data with which the live image data is to be combined.

Geographically integrating the live image data with the stored image data may include determining a geographic position of the live image data based on the geographic position of the vehicle, positioning information (e.g., aiming direction in three dimensions) of the camera, and distance from the camera to the target region. The live image data may be placed into the inset within the stored image data such that the geographic position of the live image data matches the geographic position of the inset within the stored image data. Determining the geographic position of the live image data may also be performed using image recognition of the live image data in comparison with the stored image data. The transformation of the live image data to normalize the apparent viewing angle may be performed prior to performing the image recognition.

In a step 8060, the display image is displayed on a display unit, such as the display unit 6090. Textual information pertaining to the stored image data, the live image data, the position or travel of the vehicle, and/or landmarks within the display image may be overlaid onto the display image. Links to further information about a point of interest in a geographic region proximate the geographic position of the vehicle may also be displayed on the display image such that a traveler may select a displayed link (e.g., touch it on a touch screen or click it using a mouse pointer), and additional information may then be displayed corresponding to the selected link. The additional information may include a web page accessed from a local data store or over the Internet using a wireless communications system.

In general, the system or systems may be implemented using any general purpose computer or computers and the components may be implemented as dedicated applications or in client-server architectures, including a web-based architecture. Any of the computers may comprise a processor, a memory for storing program data and executing the program data, a permanent storage such as a disk drive, a communications port for handling communications with external devices, and user interface devices; including a display, keyboard, mouse, etc. When software modules are involved, these software modules may be stored as program instructions executable on the processor on a computer-readable storage medium, where the program instructions stored on this medium can be read by the computer, stored in the memory, and executed by the processor. Examples of the storage medium include magnetic storage media (e.g., floppy disks, hard disks, or magnetic tape), optical recording media (e.g., CD-ROMs or digital versatile disks (DVDs)), and electronic storage media (e.g., integrated circuits (IC's), ROM, RAM, EEPROM, or flash memory). The storage medium may also be distributed over network-coupled computer systems so that the program instructions are stored and executed in a distributed fashion.

The present invention may be described in terms of functional block components and various processing steps. Such functional blocks may be realized by any number of hardware and/or software components configured to perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, where the elements of the present invention are implemented using software programming or software elements the invention may be implemented with any programming or scripting language such as C, C++, Java, assembler, or the like, with the various algorithms being implemented with any combination of data structures, objects, processes, routines or other programming elements. Furthermore, the present invention could employ any number of conventional techniques for electronics configuration, signal processing and/or control, data processing and the like. The word mechanism is used broadly and is not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

As these embodiments of the present invention are described with reference to illustrations, various modifications or adaptations of the methods and or specific structures described may become apparent to those skilled in the art. Hence, these descriptions and drawings should not be considered in a limiting sense, as it is understood that the present invention is in no way limited to only the embodiments illustrated.

It will be recognized that the terms "comprising," "including," and "having," as used herein, are specifically intended to be read as open-ended terms of art. The use of the terms "a" and "and" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context.

## Claims

1. A method of providing a live mapping display in a vehicle, the method comprising determining (8010) a geographic position of a vehicle, accessing (8020) stored image data corresponding to the geographic position, positioning (8030) a camera to direct the camera toward a target region proximate a geographic region corresponding to the accessed stored image data, receiving (8040) live image data from the camera of a captured image of the target region, generating (8050) a display image including the stored image data combined with the live image data, and displaying (8060) the display image to a traveler onboard the vehicle, the method **characterized in that** the method further comprising combining the live image data (7020) with the stored image data (7010) by inserting the live image data in an inset within the stored image data and geographically integrating the live image data with the stored image data, wherein the target region (7020) is a subset of the geographic region (7010) corresponding to the accessed stored image data such that an area of the target region is less than an area of the geographic region and a display area of the live image data included in the display image is less than a display area bounded by the outer edges of the stored image data included in the display image.

2. The method according to claim 1, wherein geographically integrating the live image data with the stored image data comprises
determining a geographic region corresponding to the live image data (7020) using at least one of image recognition of the live image data in comparison with the stored image data (7010), the geographic position of the vehicle, and positioning information of the camera; and
placing the inset within the stored image data such that the geographic region corresponding to the live image data matches the geographic region corresponding to the inset within the stored image data.

3. The method according to any of claim 1 or 2, wherein the accessed stored image data (7010) which is combined with the live image data (7020) changes according to a change in the geographic position of the vehicle as the vehicle travels.

4. The method according to any of claim 1 to 3, wherein geographically integrating the live image data (7020) with the stored image data (7010) includes transforming the live image data such that a perceived viewing angle of the live image data matches that of the stored image data.

5. The method according to any of claim 1 to 4, further comprising
including in the display image a link to information pertaining to a point of interest within the geographic region corresponding to the accessed stored image data;
receiving an input from the traveler selecting the link to the information; and displaying the information in response to the traveler's input.

6. The method according to any of claim 1 to 5, wherein the live image data (7020) includes at least one of real-time video data, and frame image data captured at periodic time intervals.

7. The method according to any of claim 1 to 6, further comprising selecting the target region toward which to direct the camera (6020) according to at least one of a predetermined program, and a tabulation of inputs received from a plurality of input devices (6080) representing votes of multiple travelers.

8. The method according to any of claim 1 to 7, further comprising customizing the display image to display a first customized display image to a first traveler in response to input from the first traveler, and customizing the display image to display a second customized display image to a second traveler in response to input from the second traveler.

9. The method according to any of claim 1 to 8, further comprising at least one of
controlling the camera (6020) to track the target region while the geographic position of the vehicle changes, such that the display image includes an updated live view of the target region for a plurality of geographic positions of the vehicle, and updating the display image at least once per minute to correspond with a change in the geographic position of the vehicle.

10. A live mapping display system onboard a vehicle, the system comprising a position determining unit (6040) including a vehicle geographic position output, a camera (6020) including an image sensor and an image output representing live image data of a target region exterior to the vehicle as captured by the image sensor, a display unit (6090) including an image display which displays display image data directed toward a traveler onboard the vehicle, a data store (6070) including stored image data of geographic regions, and a controller (6050) communicatively coupled with the position determining unit, the camera, the display unit, and the data store, the controller including an input that receives the live image data corresponding to the target region from the camera, a selection unit which selects stored image data from the data store based on the vehicle geographic position output of the position determining unit, and a display output at which a display image data including the stored image data combined with the live image data is provided, the system **characterised in that** the target region is a subset of a geographic region corresponding to the selected stored image data (7010) such that an area of the target region is less than an area of the geographic region and an area of a live image data (7020) included in the display image data is less than an area bounded by the outer edges of the stored image data included in the display image.

11. The system according to claim 10, wherein:
the vehicle is an aircraft and the camera (6020) is positioned at a lower portion of the aircraft to capture a landscape image exterior to the aircraft while the aircraft is in flight.

12. The system according to any of claim 10 or 11, further comprising a wireless communications system (2020) and the controller (6050) is further configured use the wireless communications system to download the stored image data (7010) corresponding to the vehicle geographic position output.

13. The system according to any of claim 10 to 12, further comprising
a camera (6020) mount having a controllably movable axis, the camera being mounted upon the camera mount such that the camera mount directs the camera toward the target region,
wherein the controller (6050) is further communicatively coupled with the camera mount, and the controller further includes
a control output that moves the controllably movable axis of the camera mount to direct the camera toward the target region.

14. The system according to any of claim 10 to13, further comprising a plurality of input devices (6080) communicatively coupled with the controller (6050), each of the plurality of input devices configured to receive input from a traveler, and wherein the target region is determined based on input received from at least one of the plurality of input devices.

## Patentansprüche

1. Ein Verfahren zur Bereitstellung einer Live-Kartenanzeige in einem Fahrzeug, wobei das Verfahren das Bestimmen (8010) einer geografischen Position eines Fahrzeugs, Zugreifen (8020) auf gespeicherte Bilddaten korrespondierend zu der geografischen Position, Positionierung (8030) einer Kamera, um die Kamera zu einer Zielregion benachbart zu einer geografischen Region, die mit den zugegriffenen gespeicherten Bilddaten korrespondiert, zu führen, Empfangen (8040) von Live-Bilddaten von der Kamera von einem erfassten Bild der Zielregion, Generieren (8050) eines Anzeigenbildes enthaltend die gespeicherten Bilddaten kombiniert mit den Live-Bilddaten, und Anzeigen (8060) des Anzeigebildes für einen Reisenden im Fahrzeug, umfasst, wobei das Verfahren **dadurch** charakterisiert ist, dass das Verfahren des weiteren das Kombinieren der Live-Bilddaten (7020) mit den gespeicherten Bilddaten (7010) durch Einführen der Live-Bilddaten in einen Ausschnitt innerhalb der gespeicherten Bilddaten und geografisches Einbinden der Live-Bilddaten in die gespeicherten Bilddaten umfasst, wobei die Zielregion (7020) eine Teilmenge der geografischen Region (7010) ist, die mit den zugegriffenen gespeicherten Bilddaten korrespondiert, so dass ein Bereich der Zielregion kleiner ist als ein Bereich der geografischen Region und ein Anzeigebereich der Live-Bilddaten, der in dem Anzeigebild enthalten ist, kleiner ist als ein Anzeigebereich begrenzt von den äußeren Rändern der gespeicherten Bilddaten, die in dem Anzeigenbild enthalten sind.

2. Das Verfahren gemäß Anspruch 1, wobei das geografische Einbinden der Live-Bilddaten in die gespeicherten Bilddaten umfasst:
Bestimmen einer geografischen Region, die mit den Live-Bilddaten (7020) korrespondiert, wobei zumindest eine Bilderkennung der Live-Bilddaten im Vergleich mit den gespeicherten Bilddaten (7010), der geografischen Position des Fahrzeuges und Positionsinformationen der Kamera verwendet werden,
Platzieren des Ausschnitts innerhalb der gespeicherten Bilddaten in der Weise, dass die mit den Live-Bilddaten korrespondierende geografische Region auf die zu dem Ausschnitt innerhalb der gespeicherten Bilddaten korrespondierenden geografischen Region abgestimmt wird.

3. Das Verfahren gemäß einem der Ansprüche 1 oder 2, wobei die zugegriffenen gespeicherten Bilddaten (7010), welche mit den Livebilddaten (7020) kombiniert werden, sich gemäß einer Änderung in der geografischen Position des Fahrzeuges während der Fahrzeugbewegung ändern.

4. Das Verfahren gemäß einem der Ansprüche 1 bis 3, wobei das geografische Einbinden der Live-Bilddaten (7020) in die gespeicherten Bilddaten (7010) die Umwandlung der Live-Bilddaten enthält, so dass ein erkannter Beobachtungswinkel der Live-Bilddaten auf die gespeicherten Bilddaten abgestimmt wird.

5. Das Verfahren gemäß einem der Ansprüche 1 bis 4 des weiteren umfassend
Einschließen einer Verbindung zu Informationen betreffend einen interessierenden Punkt innerhalb der geografischen Region, die zu den zugegriffenen gespeicherten Bilddaten korrespondieren, in dem angezeigten Bild;
Empfangen einer Eingabe von einem Reisenden, der die Verbindung zu der Information auswählt; und
Anzeigen der Information in Antwort zu der Eingabe des Reisenden.

6. Das Verfahren gemäß einem der Ansprüche 1 bis 5, wobei die Live-Bilddaten (7020) mindestens Echtzeitvideodaten und Rahmenanzeigedaten aufgenommen in periodischen Zeitintervallen enthalten.

7. Das Verfahren gemäß einem der Ansprüche 1 bis 6, des weiteren umfassend das Auswählen der Zielregion, in welche die Kamera (6020) gemäß mindestens einem vorbestimmten Programm gelenkt wird, und eine Aufstellung von Eingaben erhalten von einer Vielzahl von Eingabevorrichtungen (6080), die die Stimmen von mehreren Reisenden repräsentieren, zu lenken.

8. Das Verfahren gemäß einem der Ansprüche 1 bis 7, des Weiteren umfassend die Anpassung des Anzeigebildes, um ein erstes angepasstes Anzeigebild für einen ersten Reisenden in Reaktion auf die Eingabe des ersten Reisenden anzuzeigen, und Anpassen des Anzeigebildes, um ein zweites angepasstes Anzeigebild für einen zweiten Reisenden in Reaktion auf die Eingabe des zweiten Reisenden anzuzeigen.

9. Das Verfahren gemäß einem der Ansprüche 1 bis 8, des Weiteren umfassend mindestens
die Steuerung der Kamera (6020), um die Zielregion während der Änderung der geografischen Position des Fahrzeuges zu verfolgen, so dass das Anzeigebild eine aktualisierte Live-Ansicht der Zielregion für eine Vielzahl von geografischen Positionen des Fahrzeuges enthält, und Aktualisieren des Anzeigebildes zumindest einmal pro Minute, um mit einer Änderung in der geografischen Position des Fahrzeuges zu korrespondieren.

10. Ein Live-Kartenanzeigesystem in einem Fahrzeug, wobei das System eine positionsbestimmende Einheit (6040) enthaltend eine Ausgabe der geografischen Position des Fahrzeuges, eine Kamera (6020) enthaltend einen Bildsensor und eine Bildausgabe, die die Live-Bilddaten einer Zielregion außerhalb des Fahrzeuges aufgenommen durch den Bildsensor darstellt, eine Anzeigeneinheit (6090) enthaltend ein Anzeigebild, welches Anzeigebilddaten gerichtet auf einen Reisenden in einem Fahrzeug anzeigt, eine Datenspeicherung (6070) enthaltend gespeicherte Bilddaten von geografischen Regionen, und eine Steuerung (6050), die kommunikativ mit der positionsbestimmenden Einheit, der Kamera, der Anzeigeeinheit, und dem Datenspeicher gekoppelt ist, wobei die Steuerung einen Eingang enthält, der die Live-Bilddaten korrespondierend zu der Zielregion von der Kamera empfängt, eine Auswahleinheit, welche die gespeicherten Bilddaten von dem Datenspeicher basierend auf der Ausgabe der geografischen Position des Fahrzeuges durch die positionsbestimmende Einheit auswählt, und eine Anzeigeausgabe, welche Anzeigebilddaten enthaltend die gespeicherten Bilddaten kombiniert mit den Live-Bilddaten bereitgestellt wird, umfasst, wobei das System **dadurch** charakterisiert ist, dass die Zielregion eine Teilmenge einer geografischen Region ist, die mit den ausgewählten gespeicherten Bilddaten (7010) korrespondiert, so dass ein Bereich der Zielregion kleiner ist als ein Bereich der geografischen Region und ein Bereich von Live-Anzeigedaten (7020), die in den Anzeigebilddaten enthalten ist, kleiner ist als ein Bereich, der durch die äußeren Ränder der gespeicherten Bilddaten enthaltend in dem Anzeigebild begrenzt wird.

11. Das System gemäß Anspruch 10, wobei das Fahrzeug ein Flugzeug ist und die Kamera (6020) in einer unteren Position des Fahrzeuges positioniert ist, um eine Landschaftsbild außerhalb des Flugzeuges aufzunehmen, während das Flugzeug fliegt.

12. Das System gemäß einem der Ansprüche 10 oder 11, des weiteren ein drahtloses Kommunikationssystem (2020) umfassend, wobei die Steuerung (6050) des weiteren konfiguriert ist, um das drahtlose Kommunikationssystem zu verwenden, um die gespeicherten Bilddaten (7010) korrespondierend zu der Ausgabe der geografischen Position des Fahrzeuges herunterzuladen.

13. Das System gemäß einem der Ansprüche 10 bis 12, des weiteren umfassend
eine Kamerahalterung (6020) mit einer steuerbaren beweglichen Achse, wobei die Kamera an der Kamerahalterung so befestigt ist, so dass die Kamerahalterung die Kamera in Richtung der Zielregion lenkt,
wobei die Steuerung (6050) des Weiteren kommunikativ mit der Kamerahalterung gekoppelt ist, und die Steuerung des weiteren einen Steuerausgang enthält, der die steuerbare bewegliche Achse der Kamerahalterung bewegt, um die Kamera in Richtung der Zielregion zu lenken.

14. Das System gemäß einem der Ansprüche 10 bis 13, des Weiteren umfassend eine Vielzahl von Eingabevorrichtungen (6080), die kommunikativ mit der Steuerung (6050) gekoppelt sind, wobei jede der Vielzahl von Eingabevorrichtungen konfiguriert ist, um eine Eingabe eines Reisenden aufzunehmen, und wobei die Zielregion bestimmt basierend auf der Eingabe wird, die von mindestens einer der Vielzahl von Eingabevorrichtungen erhalten wird.

## Revendications

1. Procédé de fourniture d'un affichage cartographique en direct dans un véhicule, le procédé comprenant la détermination (8010) d'une position géographique d'un véhicule, l'accès (8020) à des données d'image stockées correspondant à la position géographique, le positionnement (8030) d'un appareil de prise de vues pour diriger l'appareil de prise de vues vers une région cible proche d'une région géographique correspondant aux données d'image stockées faisant l'objet d'un accès, la réception (8040) de données d'image en direct en provenance de l'appareil de prise de vues d'une image capturée de la région cible, la génération (8050) d'une image d'affichage comprenant les données d'image stockées combinées aux données d'image en direct, et l'affichage (8060) de l'image d'affichage à un voyageur à bord du véhicule, le procédé **caractérisé en ce que** le procédé comprenant en outre la combinaison des données d'image en direct (7020) aux données d'image stockées (7010) en insérant les données d'image en direct dans une incrustation à l'intérieur des données d'image stockées et en intégrant géographiquement les données d'image en direct aux données d'image stockées, dans lequel la région cible (720) est un sous-ensemble de la région géographique (7010) correspondant aux données d'image stockées faisant l'objet d'un accès de sorte qu'une zone de la région cible soit inférieure à une zone de la région géographique et qu'une zone d'affichage des données d'image en direct comprises dans l'image d'affichage soit inférieure à une zone d'affichage limitée par les bords extérieurs des données d'image stockées comprises dans l'image d'affichage.

2. Procédé selon la revendication 1, dans lequel l'intégration géographique des données d'image en direct aux données d'image stockées comprend
la détermination d'une région géographique correspondant aux données d'image en direct (7020) en utilisant au moins une de la reconnaissance d'image des données d'image en direct par comparaison avec les données d'image stockées (7010), de la position géographique du véhicule, et d'informations de positionnement de l'appareil de prise de vues ; et
le placement de l'incrustation à l'intérieur des données d'image stockées de sorte que la région géographique correspondant aux données d'image en direct concorde avec la région géographique correspondant à l'incrustation à l'intérieur des données d'image stockées.

3. Procédé selon l'une quelconque des revendications 1 ou 2, dans lequel les données d'image stockées faisant l'objet d'un accès (7010) qui sont combinées aux données d'image en direct (7020) changent en fonction d'un changement de la position géographique du véhicule lorsque le véhicule se déplace.

4. Procédé selon l'une quelconque des revendications 1 à 3, dans lequel l'intégration géographique des données d'image en direct (7020) aux données d'image stockées (7010) comprend la transformation des données d'image en direct de sorte qu'un angle de vue perçu des données d'image en direct concorde avec celui des données d'image stockées.

5. Procédé selon l'une quelconque des revendications 1 à 4, comprenant en outre l'inclusion dans l'image d'affichage d'un lien vers des informations se rapportant à un point d'intérêt à l'intérieur de la région géographique correspondant aux données d'image stockées faisant l'objet d'un accès ;
la réception d'une entrée en provenance du voyageur sélectionnant le lien vers les informations ; et
l'affichage des informations en réponse à l'entrée du voyageur.

6. Procédé selon l'une quelconque des revendications 1 à 5, dans lequel les données d'image en direct (7020) comprennent au moins une de données vidéo en temps réel, et de données d'image de trame capturées à des intervalles de temps périodiques.

7. Procédé selon l'une quelconque des revendications 1 à 6, comprenant en outre la sélection de la région cible vers laquelle diriger l'appareil de prise de vues (6020) selon au moins un d'un programme prédéterminé, et d'une mise en tableau d'entrées reçues d'une pluralité de dispositifs d'entrée (6080) représentant les votes de multiples voyageurs.

8. Procédé selon l'une quelconque des revendications 1 à 7, comprenant en outre la personnalisation de l'image d'affichage pour afficher une première image d'affichage personnalisée à un premier voyageur en réponse à une entrée du premier voyageur, et la personnalisation de l'image d'affichage pour afficher une seconde image d'affichage personnalisée à un second voyageur en réponse à une entrée du second voyageur.

9. Procédé selon l'une quelconque des revendications 1 à 8, comprenant en outre au moins une de
la commande de l'appareil de prise de vues (6020) pour suivre la région cible pendant que la position géographique du véhicule change, de sorte que l'image d'affichage comprenne une vue en direct mise à jour de la région cible pour une pluralité de positions géographiques du véhicule, et la mise à jour de l'image d'affichage au moins une fois par minute pour correspondre à un changement de la position géographique du véhicule.

10. Système d'affichage cartographique en direct à bord d'un véhicule, le système comprenant une unité de détermination de position (6040) comprenant une sortie de position géographique de véhicule, un appareil de prise de vues (6020) comprenant un capteur d'image et une sortie d'image représentant des données d'image en direct d'une région cible extérieure au véhicule telle que capturée par le capteur d'image, une unité d'affichage (6090) comprenant un afficheur d'image qui affiche des données d'image d'affichage dirigées vers un voyageur à bord du véhicule, un dispositif de stockage de données (6070) comprenant des données d'image stockées de régions géographiques, et un contrôleur (6050) couplé de façon communicative à l'unité de détermination de position, l'appareil de prise de vues, l'unité d'affichage, et le dispositif de stockage de données, le contrôleur comprenant une entrée qui reçoit les données d'image en direct correspondant à la région cible en provenance de l'appareil de prise de vues, une unité de sélection qui sélectionne des données d'image stockées dans le dispositif de stockage de données sur la base de la sortie de position géographique de véhicule de l'unité de détermination de position, et d'une sortie d'affichage au niveau de laquelle des données d'image d'affichage comprenant les données d'image stockées combinées aux données d'image en direct sont fournies, le système **caractérisé en ce que** la région cible est un sous-ensemble d'une région géographique correspondant aux données d'image stockées sélectionnées (7010) de sorte qu'une zone de la région cible soit inférieure à une zone de la région géographique et qu'une zone des données d'image en direct (7020) comprises dans les données d'image d'affichage soit inférieure à une zone limitée par les bords extérieurs des données d'image stockées comprises dans l'image d'affichage.

11. Système selon la revendication 10, dans lequel :
le véhicule est un avion et l'appareil de prise de vues (6020) est positionné au niveau d'une partie inférieure de l'avion pour capturer une image de paysage extérieure à l'avion pendant que l'avion est en vol.

12. Système selon l'une quelconque des revendications 10 ou 11, comprenant en outre un système de communications sans fil (2020) et le contrôleur (6050) est en outre configuré pour utiliser le système de communications sans fil pour télécharger les données d'image stockées (7010) correspondant à la sortie de position géographique de véhicule.

13. Système selon l'une quelconque des revendications 10 à 12, comprenant en outre une suspension de l'appareil de prise de vues (6020) ayant un axe mobile pouvant être commandé, l'appareil de prise de vues étant monté sur la suspension de l'appareil de prise de vues de sorte que la suspension de l'appareil de prise de vues dirige l'appareil de prise de vues vers la région cible,
dans lequel le contrôleur (6050) est en outre couplé de façon communicative à la suspension de l'appareil de prise de vues, et le contrôleur comprend en outre une sortie de commande qui déplace l'axe mobile pouvant être commandé de la suspension de l'appareil de prise de vues pour diriger l'appareil de prise de vues vers la région cible.

14. Système selon l'une quelconque des revendications 10 à 13, comprenant en outre une pluralité de dispositifs d'entrée (6080) couplés de façon communicative au contrôleur (6050), chacun de la pluralité de dispositifs d'entrée configuré pour recevoir une entrée d'un voyageur, et dans lequel la région cible est déterminée sur la base d'une entrée reçue d'au moins un de la pluralité de dispositifs d'entrée.
